# EUROPÄISCHE PATENTSCHRIFT

(11) **EP 0 990 828 B1**
(45) Veröffentlichungstag und Bekanntmachung des Hinweises auf die Patenterteilung: **14.05.2003**
(21) Anmeldenummer: 99118011.8
(22) Anmeldetag: 20.09.1999
(51) Int. Cl.: F16L 9/19

(54) **Mehrkanal-Flachrohr**
Flat pipe with multichannel arrangement
Tuyau plat avec canaux multiples

(30) Priorität: 01.10.1998 DE 19845336
(43) Veröffentlichungstag der Anmeldung: 05.04.2000
(73) Patentinhaber: Behr GmbH & Co., 70469 Stuttgart (DE)
(72) Erfinder: Dienhart, Bernd, Dr.-Ing., 50935 Köln (DE); Krauss, Hans-Joachim, Dipl.-Ing., 70567 Stuttgart (DE); Mittelstrass, Hagen, Dipl.-Ing., 71149 Bondorf (DE); Schirrmacher, Roland, Dipl.-Ing., 71638 Ludwigsburg (DE); Staffa, Karl-Heinz, Dipl.-Ing., 70567 Stuttgart (DE); Walter, Christoph, Dipl.-Ing., 70376 Stuttgart (DE)

(56) Entgegenhaltungen:
- EP-A- 0 895 012
- DE-C- 2 660 524
- FR-A- 2 269 017
- US-A- 5 642 775

## Beschreibung

Die Erfindung bezieht sich auf ein Mehrkanal-Flachrohr für einen Wärmeübertrager nach dem Oberbegriff des Anspruchs 1.

Aus der Patentschrift EP 0 219 974 B1 ist ein Flachrohr zum Einsatz in einem Kondensator einer Kühl- bzw. Klimaanlage bekannt, das mehrere in Rohrquerrichtung nebeneinanderliegende, parallele Strömungskanäle aufweist, die durch eine wellenförmige Einlage gebildet sind, die in das Innere des ursprünglich hohl, einkanalig gefertigten Rohres eingebracht und an den Kontaktstellen mit der Rohrinnenwand fluiddicht verlötet ist. Auf diese Weise entstehen nebeneinanderliegende Strömungskanäle mit dreieckförmigem Querschnitt entsprechend dem Querschnitt der wellenförmigen Einlage. Das Flachrohr ist auf die Verwendung des Kältemittels R-12 und ähnlicher Kältemittel ausgelegt, bei denen typischerweise Betriebsdrücke von höchstens etwa 20 bar auftreten. In einem typischen Beispiel beträgt die Rohrwanddicke 0,381mm und die Rohrausdehnung in Rohrhochrichtung 1,91mm. Die Patentschrift US 5.372.188 offenbart als Alternative zum Einbringen einer wellenförmigen Einlage die Fertigung von Flachrohren mit einer Reihe von Kanälen mit dreieckförmigen Querschnitten aus einem extrudierten Profil.

In der Offenlegungsschrift DE 38 43 305 A1 und den Patentschriften US 3.416.600 und US 5.036.909 sind Flachrohre mit mehreren nebeneinanderliegenden Strömungskanälen mit rechteckigen Querschnitten offenbart, wobei an den Kanalrändern oberflächenvergrößernde Vorsprünge vorgesehen sein können.

In der Patentschrift US 5.307.870 ist ein Mehrkanal-Flachrohr für einen Wärmeübertrager gezeigt, das mehrere in Rohrquerrichtung nebeneinanderliegende, parallele Strömungskanäle mit kreisrundem Querschnitt aufweist, wobei als Alternative genannt wird, dass die Strömungskanäle ellipsenförmig sein können. Die Rohraußenflächen des Flachrohres mit den kreisrunden Kanälen können eine zu den Kanälen korrespondierende wellenförmige Querkontur aufweisen.

In der Patentschrift US 5.642.775 ist ein Wärmeleitungselement in Form eines plattenförmigen Streifens mit mehreren in Streifenquerrichtung nebeneinanderliegenden, parallelen Strömungskanälen offenbart, das z.B. für einen Einsatz in einem elektromagnetischen Bauelement zu einer Spule gewickelt ist, wobei die Strömungskanäle einen elliptischen Querschnitt mit senkrecht zur Streifenquerrichtung liegender großer Halbachse aufweisen.

Eine in letzter Zeit zunehmend an Bedeutung gewinnende Anwendung sind Wärmeübertrager für Klimaanlagen, insbesondere in Kraftfahrzeugen, die mit dem Kältemittel R-744, d.h. Kohlendioxid, arbeiten. Hier sind Wärmeübertragerstrukturen z.B. aus geradlinigen oder serpentinenförmigen Flachrohren erforderlich, die einem Betriebsdruck von über 100 bar zuverlässig standhalten. Zwar kommen hierfür extrudierte Mehrkanal-Flachrohre mit im Querschnitt kreisrunden Strömungskanälen und den üblichen planen, unprofilierten, breitseitigen Rohraußenflächen in Betracht. Es zeigt sich jedoch, dass die Wärmeübertragungsleistung dieser Flachrohre aufgrund der relativ geringen wärmeübertragenden Oberflächen verbesserungswürdig ist und die Rohre zudem bei gegebener Wärmeübertragungsleistung relativ schwer sind.

Der Erfindung liegt als technisches Problem die Bereitstellung eines Mehrkanal-Flachrohres der eingangs genannten Art zugrunde, das für Hochdruckanwendungen mit Betriebsdrücken von über 100 bar geeignet ist und dabei relativ leicht ist und eine verhältnismäßig hohe Wärmeübertragungsleistung bei geringem kältemittelseitigem Druckabfall besitzt.

Die Erfindung löst dieses Problem durch die Bereitstellung eines Mehrkanal-Flachrohres mit den Merkmalen des Anspruchs 1. Dieses Flachrohr beinhaltet Strömungskanäle mit ovalem Querschnitt. Es zeigt sich, dass das Flachrohr auf diese Weise so ausgelegt werden kann, dass einerseits eine relativ hohe wärmeübertragende Oberfläche zur Verfügung steht und andererseits die verbleibenden Wanddicken ausreichen, die vom Rohr geforderte Berstdruckfestigkeit zu erfüllen. Hierzu sind die Strömungskanäle in definierter Weise orientiert, und zwar so, dass ihre große Halbachse bezüglich Rohrquerachse um einen vorgegebenen Schrägwinkel geneigt ist. Alternativ oder zusätzlich zu dieser Maßnahme besitzen die Kanalränder in Umfangsrichtung einen gewellten oder einen vieleckigen Verlauf, wobei unter letzterem zu verstehen ist, dass der ovale Querschnitt aus einem Vieleck mit mindestens fünf und vorzugsweise deutlich mehr als fünf Ecken gebildet ist. Die wellenförmige oder vieleckige, unregelmäßige Oberflächenkontur kann je nach Anwendungsfall herstellungstechnische Vorteile und vor allem Vorteile hinsichtlich Strömungsverhalten und Wärmeübertragungsfähigkeit sowie Druckfestigkeit haben.

Das erfindungsgemäße Mehrkanal-Flachrohr stellt eine zufriedenstellende volumen- und gewichtsbezogene Wärmeübertragungsleistung bei relativ geringem kältemittelseitigem Druckabfall und niedrigem Gewicht zur Verfügung. Es kann insbesondere für Verdampfer und Kondensatoren bzw. Gaskühler sowie innere Wärmeübertrager von CO₂-Fahrzeugklimaanlagen eingesetzt werden. Die Herstellung erfolgt vorzugsweise als extrudiertes Flachrohr, wobei die gewünschte ovale Querschnittsform der Einzelkanäle beim Extrusionsvorgang durch entsprechend gestaltete Matrizen bewirkt wird.

In einer Weiterbildung der Erfindung nach Anspruch 2 besitzt das Flachrohr eine zu den Strömungskanälen korrespondierende, wellenförmige Rohraußenkontur derart, dass das Flachrohr in der Rohrhochrichtung zwischen je zwei Strömungskanälen dünner ist als im Bereich eines jeweiligen Strömungskanals.

In weiterer Ausgestaltung der Erfindung gemäß Anspruch 3 ist das Mehrkanal-Flachrohr so ausgelegt, dass das Verhältnis von großer zu kleiner Halbachse seiner ovalen Strömungskanäle zwischen den Werten 1,2 und 1,4 liegt und/oder das Verhältnis von Materialquerschnittsfläche zu durchströmbarer Querschnittsfläche zwischen 2,0 und 4,0 liegt und/oder bei parallel zur Rohrquerachse liegender kleiner Halbachse des jeweiligen Strömungskanals das Verhältnis vom doppelten Wert der kleinen Halbachse zur Periodenlänge der Strömungskanalreihe zwischen 0,5 und 0,7 und/oder das Verhältnis vom doppelten Wert der großen Halbachse zur Flachrohrdicke zwischen 0,6 und 0,8 liegt. Diese Wertebereiche erweisen sich für die Erzielung einer hohen Wärmeübertragungsleistung einerseits und einer hohen Berstdruckfestigkeit bei möglichst niedrigem Gewicht andererseits als besonders günstig.

Vorteilhafte Ausführungsformen der Erfindung sind in den Zeichnungen dargestellt und werden nachfolgend beschrieben. Hierbei zeigen:
- Fig. 1: eine teilweise Querschnittsansicht eines Mehrkanal-Flachrohres mit ovalen Strömungskanälen, deren große Halbachsen schräg zur Rohrquerachse verlaufen, und
- Fig. 2: eine teilweise Querschnittsansicht eines Mehrkanal-Flachrohres mit ovalen Strömungskanälen mit wellenförmigem Querschnittsrand und zu den Kanälen korrespondierend profilierten Rohraußenflächen und zugehörig profilierter Wellrippe.

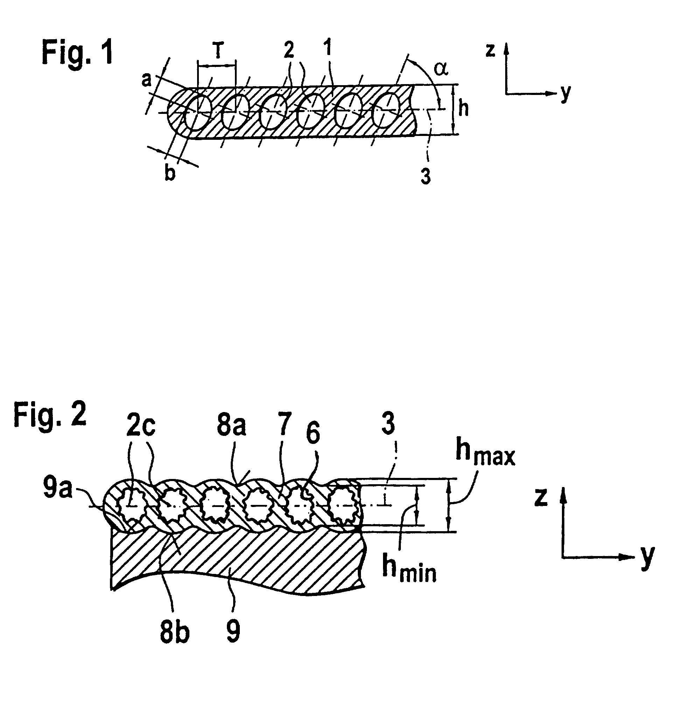

Das in Fig. 1 in einem linken Bereich seines Querschnitts gezeigte Mehrkanal-Flachrohr 1 beinhaltet eine Mehrzahl von parallelen Strömungskanälen 2, die in Rohrquerrichtung y nebeneinanderliegend und voneinander getrennt in einer Reihe angeordnet sind und eine ovale, im wesentlichen elliptische Querschnittsform aufweisen. Die parallel versetzten Strömungskanäle 1 sind so orientiert, dass die große Halbachse a ihres ovalen Querschnitts schräg zur Rohrquerrichtung 3 liegt, d.h. einen vorgegebenen Winkel α mit dieser einschließt, der größer als 0° und kleiner als 90° ist.

Die Dimensionierung des Flachrohrs 1, speziell von dessen ovalen Strömungskanälen 2 einerseits und dem sie umgebenden Rohrkörper 4 andererseits, ist so gewählt, dass das Flachrohr 1 zum einen die Berstdruckanforderungen erfüllt, die an Wärmeübertrager von CO₂-Klimaanlagen in Kraftfahrzeugen gestellt werden, und zum anderen ein geringes Gewicht und eine hohe Wärmeübertragungsleistung erzielt wird. Dazu ist das Verhältnis a/b von großer Halbachse a zu kleiner Halbachse b des Kanalquerschnitts im Bereich zwischen eins und zwei gewählt, während das Verhältnis des großen Durchmessers 2·a des Kanalquerschnitts zur Rohrdicke h, d.h. zu dessen Ausdehnung in Rohrhochrichtung z, zwischen 0,4 und 0,8 liegt. Das Verhältnis des kleinen Durchmessers 2·b des Kanalquerschnitts zur Periodizitätslänge oder Teilung T, d.h. dem Abstand der Querschnittsmittelpunkte je zweier benachbarter Strömungskanäle 2, ist zwischen 0,4 und 0,9 gewählt. In absoluten Zahlen beträgt die Rohrdicke h typischerweise zwischen 1,5mm und 4,2mm, die große Halbachse a liegt typischerweise zwischen 0,4mm und 1,2mm, die kleine Halbachse b zwischen 0,4mm und 1mm und die Teilung T zwischen 1mm und 3,5mm. Der hydraulische Durchmesser der einzelnen Strömungskanäle 2, d.h. das Verhältnis des Vierfachen der Querschnittsfläche zum Innenumfang, liegt typischerweise zwischen 0,9mm und 2,0mm. Für die genannten Dimensionierungen ergibt sich ein Verhältnis des Materialquerschnitts, d.h. des Rohrkörperquerschnitts, zum frei durchströmbaren Querschnitt, d.h. zur gesamten Querschnittsfläche aller Strömungskanäle 2, zwischen 1,4 und 4,5. Die Wandstärke des Rohres 1 liegt meist zwischen etwa 0,2mm und 0,6mm, in Einzelfällen auch etwas über 1mm.

Das so ausgelegte Mehrkanal-Flachrohr 1 eignet sich insbesondere als geradliniges Rohr für einen Parallelströmungs-Wärmeübertrager oder als serpentinenförmig gebogenes Rohr für einen Wärmeübertrager vom Serpentinentyp. Insbesondere ist das Mehrkanal-Flachrohr 1 für den Einsatz in Verdampfern und Gaskühlern, wie die Kondensatoren bei CO₂-Klimaanlagen genannt werden, geeignet. Es zeigt sich, dass dergestalt dimensionierte Mehrkanal-Flachrohre den Betriebsdrücken von CO₂-Klimaanlagen, die Werte über 100 bar erreichen, zuverlässig standzuhalten vermögen und gleichzeitig relativ leicht sind und eine vergleichsweise hohe Wärmeübertragungsleistung bieten.

Bei dem in Fig. 2 gezeigten Mehrkanal-Flachrohr 7 sind wiederum mehrere parallele Strömungskanäle 2c beabstandet in einer Reihe in Rohrquerrichtung 3 nebeneinanderliegend angeordnet, in diesem Fall jedoch mit zur Rohrquerrichtung 3 senkrechter großer Halbachse a.

Um zudem ein hohes Wärmeübertragungsvermögen zu erhalten, ist bei diesem Flachrohr eine mit der Anordnung der Strömungskanäle 2c korrespondierende Profilierung der Außenflächen 8a, 8b der beiden Flachrohrbreitseiten vorgesehen. Diese Profilierung der Außenflächen 8a, 8b ist im gezeigten Querschnitt wellenlinienförmig mit einer der Strömungskanalanordnung entsprechenden Periodizität so gewählt, dass das Flachrohr 7 im Bereich eines jeweiligen Strömungskanals eine maximale Dicke hₘₐₓ und in der Mitte zwischen zwei jeweiligen Strömungskanälen eine minimale Dicke hₘᵢₙ aufweist. Durch diese Maßnahme wird die Rohroberfläche vergrößert und gleichzeitig der Abstand derselben von den innenliegenden Strömungskanälen 2c verglichen mit einer planen Gestaltung der Rohraußenfläche verringert, was die Wärmeübertragungsleistung verbessert. Gleichzeitig verbleibt zwischen den Strömungskanälen 2c und den Rohraußenflächen 8a, 8b überall eine ausreichende Wanddicke, um Betriebsdrücken von bis zu 150 bar standzuhalten, so dass auch dieses Flachrohr 7 in gleicher Weise wie das Flachrohr der Fig. 1 für Wärmeübertrager von CO₂-Klimaanlagen verwendet werden kann.

Zum Aufbau eines Rohr-/Rippenblocks, wie für Wärmeübertrager von Klimaanlagen üblich, kann bei Verwendung des außenseitig profilierten Flachrohrtyps 7 gemäß Fig. 2, sei es als geradliniges Flachrohr oder als Serpentinenflachrohr, ein dazu passend konturierter Wellrippentyp 9 vorgesehen sein, wie in Fig. 2 angedeutet. Die dazu verwendete Wellrippe 9 ist auf ihrer gesamten Länge oder wenigstens im Bereich ihrer Scheitelpunkte in Querrichtung mit einer wellenförmigen Kontur 9a versehen, deren Periodizität derjenigen der gewellten Rohraußenflächen 8a, 8b entspricht. Auf diese Weise kommen, wie aus Fig. 2 erkennbar, die Wellenberge der Querschnittskontur 9a der Wellrippen-Scheitelbereiche in den Wellentälern des jeweils angrenzenden Flachrohres 7 zu liegen. Dies verhindert ein Abrutschen der zwischen die Flachrohrlagen des Rohr-/Rippenblocks eingebrachten Wellrippen 9 von den Rohren 7 schon vor einem festen Verbinden derselben beispielsweise durch Hartlöten. Dies erleichtert die Montage des Rohr-/Rippenblocks insbesondere in den Fällen, in denen zunächst der gesamte Block mit den Flachrohren 7 und den Wellrippen 9 zwischen den Rohrlagen lose aufgebaut und erst anschließend in einem einzigen Lötvorgang zu einer festen Blockstruktur verbunden wird. Zudem begünstigt das Ineinandergreifen der Querwellenstrukturen von Flachrohr 7 einerseits und Wellrippe 9 andererseits den Wärmeübergang zwischen den beiden Elementen und damit den Wärmeübertragungs-Wirkungsgrad des Rohr-/Rippenblocks.

Es versteht sich, dass bei Bedarf auch die Flachrohre der Fig. 1 mit einer wellenförmigen außenseitigen Querkontur gemäß dem Flachrohr 7 von Fig. 2 versehen sein können und zum Aufbau eines Rohr-/Rippenblocks zusammen mit Wellrippen entsprechend dem Wellrippentyp 9 von Fig. 2, die zu den Flachrohren passend querkonturiert sind, mit denselben Vorteilen verwendet werden können, wie oben zu dem Ausführungsbeispiel von Fig. 2 genannt. Statt des glatt bogenförmigen Verlaufs der Umfangsränder der Kanäle beim Flachrohr von Fig. 1 ist eine wellenförmige Kanalumfangsberandung 6 möglich, wie im Beispiel von Fig. 2 gezeigt. Alternativ kann eine vieleckige Kanalumfangsberandung mit wenigstens fünf Ecken vorgesehen sein, d.h. der Kanalquerschnitt besitzt dann einen wellenförmigen ovalen Rand oder eine ovale Vieleckgestalt aus aneinandergrenzenden linearen Abschnitten. Diese Varianten können herstellungstechnische Vorteile oder Vorteile hinsichtlich Wärmeübertragungsleistung und Druckfestigkeit haben. Statt der zur Rohrquerrichtung 3 senkrechten Lage der großen Halbachsen a der Strömungskanäle 2c im Beispiel von Fig. 2 können diese in alternativen Ausführungsformen schräg oder parallel zu selbiger liegen. Letzteres eignet sich besonders für Anwendungen, für die ein Flachrohr mit geringer Dicke erwünscht ist. Im übrigen ergeben sich für das Flachrohr 7 von Fig. 2 und dessen vorstehend genannte Varianten die zum Flachrohr 1 von Fig. 1 oben erwähnten Dimensionierungsmöglichkeiten, wobei die gegebenenfalls vertauschten Rollen von großer Halbachse a und kleiner Halbachse b zu beachten sind.

## Patentansprüche

1. Mehrkanal-Flachrohr für einen Wärmeübertrager, mit
- mehreren in Rohrquerrichtung nebeneinanderliegenden, parallelen Strömungskanälen (2), die einen ovalen Querschnitt aufweisen,
**dadurch gekennzeichnet, dass**
- die großen Halbachsen (a) der Strömungskanäle (2) bezüglich der Rohrquerrichtung (3) um einen vorgegebenen Schrägwinkel (α) geneigt sind und/oder
- der ovale Querschnittsrand der Strömungskanäle wellenlinienförmig verlaufend oder aus einzelnen linearen Abschnitten gebildet ist, die ein Vieleck mit mindestens fünf Ecken bilden.

2. Mehrkanal-Flachrohr nach Anspruch 1, weiter **dadurch gekennzeichnet, dass** die Rohraußenflächen (8a, 8b) eine zu den Strömungskanälen (2c) korrespondierende wellenförmige Querkontur derart aufweisen, dass das Flachrohr (7) in der Rohrhochrichtung (z) zwischen je zwei Strömungskanälen dünner ist als im Bereich eines jeweiligen Strömungskanals.

3. Mehrkanal-Flachrohr nach Anspruch 1 oder 2, weiter **dadurch gekennzeichnet, dass**
- das Verhältnis (a/b) von großer Halbachse (a) zu kleiner Halbachse (b) der ovalen Strömungskanäle (2) zwischen 1,2 und 1,4 liegt und/oder
- das Verhältnis von Materialquerschnittsfläche zu durchströmbarer Querschnittsfläche des Flachrohres zwischen 2,0 und 4,0 liegt und/oder
- bei parallel zur Rohrquerachse (3) liegender kleiner Halbachse (b) das Verhältnis (2·b/T) vom doppelten Wert der kleinen Halbachse zur Periodizitätslänge (T) der Strömungskanalreihe zwischen 0,5 und 0,7 liegt und/oder das Verhältnis (2·a/h) vom doppelten Wert der großen Halbachse (a) zur Rohrdicke (h) zwischen 0,6 und 0,8 liegt.

## Claims

1. Multi-channel flat tube for a heat exchanger, with:
- several parallel flow channels (2) next to one another in the transverse direction of the tube, which have an oval cross-section,
**characterised in that**
- the major half-axis (**a**) of the flow channels (2) are inclined relative to the transverse direction (3) of the tube by a predetermined angle (α), and/or
- the edge of the oval cross-section of the flow channels is formed with an undulating shape or from individual linear sections forming a polygon with at least five corners.

2. Multi-channel flat tube according to Claim 1, further
**characterised in that**
the outer surfaces (8a, 8b) of the tube have an undulating transverse contour corresponding to the flow channels (2c), such that the flat tube (7) is thinner in the tube height direction (z) between any two adjacent flow channels than in the area of any flow channel.

3. Multi-channel flat tube according to Claims 1 or 2, further
**characterised in that**
- the ratio (**a/b**) of the major half-axis (**a**) to the minor half-axis (**b**) of the oval flow channels (2) is between 1.2 and 1.4, and/or
- the ratio of the material cross-sectional area to the flow-carrying cross-sectional area of the flat tube is between 2.0 and 4.0, and/or
- when the minor half-axis (**b**) is parallel to the transverse axis (3) of the tube, the ratio (**2·b/T**) of double the value of the minor half-axis to the periodicity length (**T**) of the row of flow channels is between 0.5 and 0.7, and/or the ratio (**2·a/h**) of double the value of the major half-axis (**a**) to the tube thickness (**h**) is between 0.6 and 0.8.

## Revendications

1. Tuyau plat à conduits multiples pour un caloporteur, comprenant :
- plusieurs conduits d'écoulement (2) parallèles et placés les uns à côté des autres, dans le sens transversal du tuyau, lesquels conduits d'écoulement ont une section ovale,
**caractérisé en ce que**
- les grands demi-axes (a) des conduits d'écoulement (2) sont inclinés suivant un angle d'inclinaison (α) prédéterminé, par rapport au sens transversal (3) du tuyau, et/ou
- le bord de section ovale des conduits d'écoulement s'étend en forme de lignes ondulées ou est constitué de parties linéaires individuelles qui forment un polygone comprenant au moins cinq coins.

2. Tuyau plat à conduits multiples selon la revendication 1, **caractérisé en outre en ce que** les surfaces extérieures (8a, 8b) du tuyau présentent un contour transversal en forme d'ondulations correspondant aux conduits d'écoulement (2c), de manière telle que le tuyau plat (7) est, à chaque fois entre deux conduits d'écoulement, dans le sens de la hauteur du tuyau (z), plus mince que dans la zone d'un conduit d'écoulement respectif.

3. Tuyau plat à conduits multiples selon la revendication 1 ou 2, **caractérisé en ce que**
- le rapport (a/b) d'un grand demi-axe (a), sur un petit demi-axe (b) des conduits ovales d'écoulement (2), se situe entre 1,2 et 1,4, et/ou
- le rapport de la surface de section du matériau, sur la surface de section du tuyau plat pouvant être traversée par l'écoulement, se situe entre 2,0 et 4,0, et/ou
- dans le cas d'un petit demi-axe (b) parallèle à l'axe transversal (3) du tuyau, le rapport (2.b/T) de la double valeur du petit demi-axe, sur la longueur de périodicité (T) de la rangée de conduits d'écoulement, se situe entre 0,5 et 0,7, et/ou le rapport (2.a/h) de la double valeur du grand demi-axe (a), sur l'épaisseur (h) du tuyau, se situe entre 0,6 et 0,8.
